# EUROPÄISCHE PATENTSCHRIFT

(11) **EP 3 544 156 B1**
(45) Veröffentlichungstag und Bekanntmachung des Hinweises auf die Patenterteilung: **12.05.2021**
(21) Anmeldenummer: 19160862.9
(22) Anmeldetag: 05.03.2019
(51) Int. Cl.: H02K 5/20, H02K 9/19

(54) **GEHÄUSE MIT KÜHLKANÄLEN FÜR EINE ELEKTRISCHE MASCHINE**
HOUSING WITH COOLING CHANNELS FOR AN ELECTRIC MACHINE
BOÎTIER AVEC CANAUX DE REFROIDISSEMENT POUR UNE MACHINE ÉLECTRIQUE

(30) Priorität: 22.03.2018 DE 102018204434
(43) Veröffentlichungstag der Anmeldung: 25.09.2019
(73) Patentinhaber: VOLKSWAGEN AKTIENGESELLSCHAFT, 38440 Wolfsburg (DE)
(72) Erfinder: Leuders, Dirk, 34131 Kassel (DE); Hensel, Roman, 34582 Borken (DE); Rang, Oliver, 34132 Kassel (DE); Braun, Andreas, 34132 Kassel (DE); Correia, Claudenê, 38100 Braunschweig (DE)

(56) Entgegenhaltungen:
- EP-A1- 2 940 835
- WO-A1-2014/194060
- CN-A- 103 516 138
- DE-A1-102008 014 386
- US-A1- 2012 194 013
- US-A1- 2012 318 479
- US-A1- 2013 126 144

## Beschreibung

Die Erfindung betrifft ein Gehäuse für eine elektrische Maschine nach Anspruch 1.

### Stand der Technik

Grundsätzlich ist es bekannt, Motorpakete von Motoren, insbesondere Elektromotoren, zu kühlen. Hierbei wird typischerweise ein Kühlfluid eingesetzt. Um dabei die Kühlung und somit den Wirkungsgrad des Motors zu erhöhen, muss eine Umspülung des Motorraums gewährleistet sein, wofür der Strom des Kühlfluides umgelenkt werden muss. Im Stand der Technik wird der Kühlfluidstrom in einem anderen Bauteil, beispielsweise in einem angrenzenden Bauteil oder in einem zusätzlichen vorgesehenen Bauteil, umgelenkt. Bei diesen aus dem Stand der Technik bekannten Lösungen, bei denen das Kühlfluid im Inneren der angrenzenden Bauteile umgelenkt wird, bedarf es einer höheren Qualitätsanforderung an die angrenzenden Bauteile, da die vom Kühlfluid benetzte Fläche dieser angrenzenden Bauteile sehr hoch ist.

Aus der US 2012/0318479 ist ein Gehäuse für eine elektrische Maschine bekannt, das eine innere Wandung und eine äußere Wandung aufweist. Die innere Wandung und die äußere Wandung sind konzentrisch zueinander angeordnet und voneinander beabstandet, insbesondere in radialer Richtung. Zwischen der inneren Wandung und der äußeren Wandung ist ein Hohlraum ausgebildet, der in einer radialen Richtung von der inneren Wandung und der äußeren Wandung begrenzt ist und zur Fluidkühlung der elektrischen Maschine ausgebildet ist. Der Hohlraum weist in Umfangsrichtung beabstandet Kanäle auf. Das Gehäuse weist einen Einlass zum Einlassen von Kühlfluid und einen Auslass zum Auslassen von Kühlfluid auf, wobei zwischen dem Einlass und dem Auslass zwischen jeweils benachbarten Kanälen ein Verbindungsbereich zum Führen des Kühlfluides zwischen den benachbarten Kanälen ausgebildet ist. Somit ist das Gehäuse hohlzylindrisch ausgebildet. Die Verbindungsbereiche sind alternierend an gegenüberliegenden axialen Enden des Gehäuses angeordnet, sodass der Hohlraum zur Fluidkühlung mäanderförmig ausgebildet ist.

Weiterhin sind Kühlmäntel mit mäanderförmigen Fluidkühlung aus der US 2012/194013 A1 und US 2013/126144 A1 bekannt.

Überdies ist aus der EP 2 940 835 A1 ein Kühlmantel mit zwei nacheinander im Strömungsfluss geschalteten mäanderförmigen Fluidkühlungen, wobei die erste mäanderförmige Fluidkühlung in der oberen Gehäusehälfte und die zweite mäanderförmige Fluidkühlung in der unteren Gehäusehälfte angeordnet ist. Die Mäander sind je entlang eines Halbumfangs des Gehäuses angeordnet. Um unter anderen die Entlüftung des Kühlmantels zu erleichtern, sind in der obersten und der untersten Stelle des Gehäuses alle Mäander der jeweils ersten und zweiten Fluidkühlung mittels je eines Bypasses strömungstechnisch verbunden.

### Darstellung der Erfindung: Aufgabe, Lösung, Vorteile

Aufgabe der vorliegenden Erfindung ist es, ein Gehäuse für eine elektrische Maschine derart weiterzuentwickeln, dass eine sichere Kühlleistung sichergestellt wird und eine einfache Herstellung ermöglich wird.

Die oben genannte Aufgabe wird durch den Anspruch 1 gelöst.

Erfindungsgemäß ist im Gehäuse ein zusätzlicher Verbindungsbereich angeordnet ist, welcher die Kanäle verbindet, welche dem Einlass und dem Auslass benachbart sind bzw. in welche der Einlass und Auslass münden. Somit verbindet dieser zusätzlicher Verbindungsbereich im Prinzip direkt den Einlass und den Auslass und bildet einen Bypass an dem mäanderförmigen Hohlraum. Der zusätzlicher Verbindungsbereich weist einen geringeren Querschnitt quer zu der Durchflussrichtung des Kühlfluides als die Querschnitte der Verbindungsbereiche auf. Vorteilhaft ist der Querschnitt des zusätzlichen Verbindungsbereichs kleiner als 1/10, ganz vorteilhaft kleiner als 1/20 des Querschnitts des Verbindungsbereichs, der die Kanäle mäanderförmig verbindet. Der zusätzliche Verbindungsbereich dient dazu, dass die im Kühlsystem gesammelte Luft aus dem Einlas direkt in den Auslass strömen kann und somit keine Luftblasen in dem Gehäuse verbleiben. Damit wird sichergestellt, dass sich keine Luftblasen in dem Kühlfluid im Gehäuse bilden können, welche Schwächung der Kühlleistung und Hitzestau bewirken würden. Dank des sehr geringen Querschnitt dieses zusätzlichen Verbindungsbereichs beeinflusst der nur unwesentlich den Kühlfluidfluss durch den Hohlraum zur Fluidkühlung.

Der zusätzliche Verbindungsbereich zur Entlüftung kann als zwei schräg zueinander verlaufende und sich treffende Bohrungen aus den benachbarten Kanälen ausgeführt werden. Ein weitere Möglichkeit ist eine stirnseitige Nut in dem Ende des Gehäuses bzw. ein Durchtritt in dem Trennsteg der Kanäle. Beide Varianten sind einfach herstellbar.

Der zusätzliche Verbindungsbereich zur Entlüftung kann vorteilhaft an dem dem Einlass benachbarten axialen Enden des Gehäuses angeordnet sein.

Unter dem Begriff "elektrische Maschine" ist insbesondere ein Aggregat gemeint, das durch ein Kühlfluid gekühlt werden muss. Hierunter fällt insbesondere ein Motor, vorzugsweise ein Elektromotor, oder Teile von diesem, wie bspw. ein Stator. In anderen Worten handelt es sich somit bei dem Gehäuse für die elektrische Maschine um ein Motorgehäuse.

Bei dem Kühlfluid kann es sich um ein beliebiges Medium handeln, wie beispielsweise Luft oder Öl. Insbesondere ist als Kühlfluid ein Wasser-/Glykolgemisch vorgesehen.

Die Kanäle sind insbesondere bis auf die Verbindungsbereiche voneinander getrennt ausgebildet. Vorzugsweise ist zwischen jeweils benachbarten Kanälen zwischen einem Einlass und dem Auslass für das Kühlfluid jeweils genau ein Verbindungsbereich zum Führen des Kühlfluides zwischen den benachbarten Kanälen ausgebildet. Dabei dient der Verbindungsbereich insbesondere als Umlenkungsbereich. In anderen Worten ist der Verbindungsbereich dazu ausgebildet, das Kühlfluid beim Führen von einem Kanal zum anderen Kanal in seiner Bewegungsrichtung umzulenken. Insbesondere fließt das Kühlfluid in einem der benachbarten Kanäle in axiale Richtung, wobei der Verbindungsbereich derart ausgebildet ist, dass das Kühlfluid nach Übertritt in den anderen benachbarten Kanal durch den Verbindungsbereich in die entgegengesetzte axiale Richtung fließt.

Die Verbindungsbereiche sind vorzugsweise Teil des Gehäuses. Insbesondere sind die Verbindungsbereiche und das Gehäuse einstückig geformt. Dadurch, dass der Verbindungsbereich ein Teil des Gehäuses ist, erfolgt die Umlenkung direkt im Gehäuse. Das Führen vom Kühlfluid zwischen benachbarten Kanälen und somit die Umlenkung erfolgt insbesondere nicht in einem angrenzenden Bauteil. So bedarf es bei den angrenzenden Bauteilen keiner besonderen Merkmale, wie beispielsweise Bearbeitung oder gusstechnischer Taschen. Ferner ist die vom Kühlfluid benetzte Fläche bei den benachbarten Bauteilen möglichst gering ausgebildet.

Vorzugsweise sind die Kanäle in axialer Richtung beidseitig offen oder zumindest einseitig, insbesondere beidseitig, geschlossen ausgebildet. Bei einer beidseitig offenen Ausbildung bedeutet dies, dass die Kanäle an ihren Stirnseiten in axialer Richtung an beiden axialen Enden des Gehäuses keine Wandung in Axialrichtung aufweisen, die das Kühlfluid in seiner Ausbereitung in axialer Richtung begrenzt. Eine Wandung an einem der axialen Enden dient somit zur Begrenzung des Kühlfluidflusses in axialer Richtung. Sind die Kanäle zumindest einseitig geschlossen ausgebildet, weist das Gehäuse zumindest an einem axialen Ende eine Wandung auf. Analoges gilt für eine beidseitig geschlossene Ausbildung, sodass die Kanäle bei dieser Ausführung an beiden axialen Enden begrenzende Wandungen aufweisen.

Bei einer beidseitig offenen oder einseitig geschlossenen Ausbildung (und somit an der anderen Seite offenen Ausbildung) der Kanäle dienen die angrenzenden Bauteile zur Begrenzung des Kühlfluidflusses. Allerdings fließt das Kühlfluid nicht durch die angrenzenden Bauteile. Eine Wandung am axialen Ende des angrenzenden Bauteils kann lediglich dazu dienen, den Kühlfluidfluss des Kanals in axiale Richtung zu begrenzen, indem diese Wandung den Kanal verschließt. In anderen Worten dichtet dann ein angrenzendes Bauteil die Kanäle in axialer Richtung an einem Ende ab. Die Umlenkung des Kühlfluides findet daher ausschließlich in dem Gehäuse in Bezug der angrenzenden Bauteile statt, indem die angrenzenden Bauteile die Kanäle verschließen. Ein Kontakt mit dem Kühlfluid seitens des benachbarten Bauteils findet somit höchstens an einem axialen Ende eines angrenzenden Bauteiles statt. Ein Kühlfluidfluss durch das Innere der angrenzenden Bauteile findet nicht statt.

Insbesondere sind zwischen der inneren Wandung und der äußeren Wandung in Umfangsrichtung voneinander beabstandete Trennstege zur Trennung der Kanäle angeordnet, wobei die Verbindungsbereiche jeweils als Öffnung in einem Trennsteg ausgebildet sind. Die Trennstege sind insbesondere als Führungsstege ausgebildet, sodass sie nicht nur die Kanäle voneinander trennen, sondern auch dazu dienen, das Kühlfluid in den Kanälen zu führen. Insbesondere sind die Trennstege in axialer Richtung ausgerichtet und vermeiden somit einen Übergang von Kühlfluid von einem Kanal zu einem benachbarten Kanal in Umfangsrichtung.

Solch ein Übertritt ist lediglich in einem Verbindungsbereich zwischen benachbarten Kanälen erwünscht. Die Öffnung ist insbesondere als Durchtritt, insbesondere gusstechnischer Durchtritt, oder als Ausfräsung ausgebildet. Aufgrund der Öffnung erstrecken sich die Trennstege nicht durchgehend von einem axialen Ende zum gegenüberliegenden axialen Ende. Insbesondere erstrecken sich die Trennstege bis auf die Öffnung durchgängig von einem axialen Ende zum gegenüberliegenden Ende des Gehäuses.

Alternativ können die Kanäle seitlich jeweils durch eine seitliche Wandung begrenzt sein, wobei die Verbindungsbereiche jeweils als Verbindungssteg zwischen zwei seitlichen Wandungen benachbarter Kanäle ausgebildet sind.

In anderen Worten sind die Kanäle an beiden Seiten in Umfangsrichtung jeweils durch eine seitliche Wandung begrenzt. Dies bedeutet, dass bei benachbarten Kanälen sich zwei seitliche Wandungen gegenüberstehen, wobei zwischen diesen insbesondere ein Luftschlitz angeordnet ist. Es sind somit benachbarte Kanäle nicht durch dieselbe seitliche Wandung begrenzt, sondern jedem Kanal kann eine eigene seitliche Wandung an beiden Enden in Umfangsrichtung zugeordnet werden. Der Verbindungssteg verbindet zwei seitliche Wandungen von benachbarten Kanälen, die sich gegenüberstehen, und ermöglicht somit ein Führen von Kühlfluid zwischen diesen benachbarten Kanälen. Dabei ist der Verbindungssteg insbesondere als Durchtritt, insbesondere gusstechnischer Durchtritt, ausgebildet.

Vorteilhafterweise ist das Gehäuse einstückig ausgebildet. Somit sind insbesondere die Verbindungsbereiche als Teil des Gehäuses anzusehen. Die Führung des Kühlfluides durch einen Verbindungsbereich findet somit innerhalb des Gehäuses mit minimalem Kontakt zu angrenzenden Bauteilen, vorzugsweise mit keinem Kontakt zu angrenzenden Bauteilen, statt.

Die Verbindungsbereiche sind alternierend an gegenüberliegenden axialen Enden des Gehäuses angeordnet, sodass der Hohlraum zur Fluidkühlung mäanderförmig ausgebildet ist. Dadurch wird erreicht, dass der Kühlfluidfluss sich bei jedem Durchtritt in einen benachbarten Kanal im Vergleich zur Kühlfluidflussrichtung des vorherigen Kanals umkehrt. In anderen Worten ist der Kühlfluidfluss in einem ersten Kanal in eine axiale Richtung ausgerichtet, während er nach Durchtritt zu einem zweiten, zum ersten Kanal benachbarten, Kanal in entgegengesetzte axiale Richtung verläuft. Beim Durchtritt zu einem dritten Kanal, der benachbart zum zweiten Kanal ist, wird der Kühlfluidfluss erneut umgedreht, sodass das Kühlfluid im dritten Kanal in die gleiche Richtung fließt wie im ersten Kanal. Dies führt sich fort zwischen einem Einlass des Kühlfluides bis zu einem Auslass des Kühlfluides.

Vorteilhafterweise ist das Gehäuse strangpressgezogen, gesintert, gegossen oder durch ein additives Verfahren, beispielsweise 3D-Druck, hergestellt. Die Geometrie des Hohlraumes ist dabei derart ausgestaltet, dass das Gehäuse im Fall einer Gussausführung durch einen ein- oder mehrteiligen Kern hergestellt werden kann.

Der Einlass und/oder der Auslass für das Kühlfluid sind vorzugsweise axial ausgebildet. Dies bedeutet, dass das Kühlfluid in axialer Richtung durch den Einlass in einen der Kanäle des Hohlraumes hineinfließt und/oder in axialer Richtung aus einem der Kanäle durch den Auslass hinausfließt. Bei einer Ausbildung des Einlasses und des Auslasses in axialer Richtung fließt das Kühlfluid durch keines der angrenzenden Bauteile. Lediglich an den axialen Enden der Kanäle könnte, falls die Kanäle axial offen ausgebildet sind, ein minimaler Kontakt mit einer abschließenden Wandung eines der angrenzenden Bauteile stattfinden. Bei einer axialen Ausbildung des Einlasses und des Auslasses wird somit gewährleistet, dass auch beim Einlassen und beim Auslassen des Kühlfluides dieses in keinen Kontakt mit benachbarten Bauteilen kommt.

Alternativ können der Einlass und/oder der Auslass radial ausgebildet sein. Dies bedeutet, dass das Kühlfluid in radialer Richtung durch den Einlass in einen Kanal eingelassen wird und/oder in radialer Richtung aus einem Kanal durch den Auslass ausgelassen wird. Bei einer radialen Ausbildung des Einlasses und/oder des Auslasses fließt das Kühlfluid beim entsprechenden Vor- oder Rücklauf, das heißt beim Einlassen oder beim Auslassen, durch eines der angrenzenden Bauteile. Allerdings sind auch bei dieser Ausführung die angrenzenden Bauteile nur an dieser speziellen Stelle, sowie bei einer möglichen Verschließung der Kanäle bei einer offenen Ausbildung der Kanäle in axialer Richtung, in Kontakt mit dem Kühlfluid. Ferner können sowohl der Einlass als auch der Auslass in einem einzigen angrenzenden Bauteil verlegt sein. Der Einlass und der Auslass können grundsätzlich an demselben axialen Ende des Gehäuses oder an gegenüberliegenden Enden angeordnet sein.

### Kurze Beschreibung der Zeichnungen

Es zeigen schematisch:
- Figur 1:: eine perspektivische Ansicht eines erfindungsgemäßen Gehäuses;
- Figur 2:: eine perspektivische Ansicht eines erfindungsgemäßen Gehäuses;
- Figur 3:: eine perspektivische Ansicht eines erfindungsgemäßen Gehäuses;
- Figur 4:: eine Detailansicht auf ein axiales Ende des Gehäuses nach Figur 3; und
- Figur 5:: eine perspektivische Ansicht des angrenzenden Teils eines erfindungsgemäßes Gehäuses an ein weiteres Bauteil.

### Bevorzugte Ausführungsformen der Erfindung

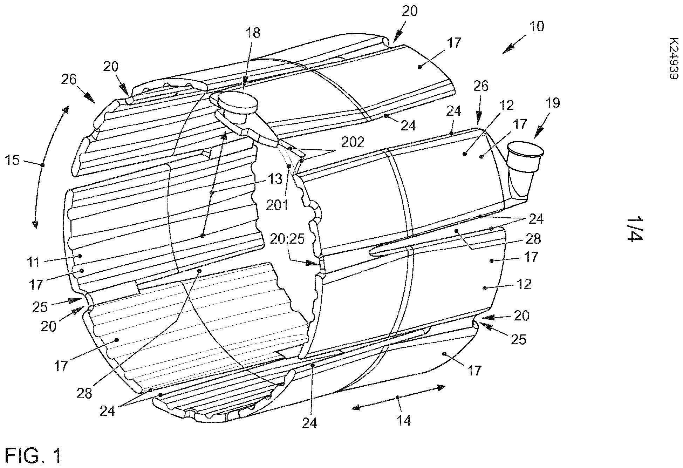

Figur 1 zeigt eine perspektivische Ansicht eines erfindungsgemäßen Gehäuses (10). Das Gehäuse umfasst eine innere Wandung (11) und eine äußere Wandung (12), die in radialer Richtung (13) beabstandet zueinander sind. Das Gehäuse (10) erstreckt sich in Umfangsrichtung (15) von einem Einlass (18) bis zu einem Auslass (19) für Kühlfluid, wobei das Kühlfluid zur Kühlung einer elektrischen Maschine dient, die im Inneren des Gehäuses (10) angeordnet ist. Zwischen den beiden Wandungen ist ein Hohlraum (16) gebildet, der zur Kühlfluidführung dient.

Das Gehäuse (10) ist derart ausgebildet, dass der Hohlraum (16) mehrere Kanäle (17) umfasst, die derart ausgebildet sind, dass das Kühlfluid in axialer Richtung (14) durch diese fließt. Der Einlass (18) und der Auslass (19) sind ebenfalls axial ausgebildet, da das Kühlfluid in axialer Richtung (14) in einen Kanal (17) des Gehäuses (10) zugeführt beziehungsweise ausgelassen wird. Dabei ist jeder Kanal (17) durch die innere Wandung (11) und die äußere Wandung (12) in radialer Richtung begrenzt, wobei der entsprechende Kanal (17) in seitlicher Richtung, das heißt in Umfangsrichtung (15) durch jeweils eine seitliche Wandung (24) begrenzt ist. Benachbarte Kanäle (17) sind demnach jeweils durch eine seitliche Wandung (24) sowie einen dazwischenliegenden Luftschlitz (28) in Umfangsrichtung (15) voneinander getrennt.

Um einen Durchfluss des Kühlfluides vom Einlass (18) bis zum Auslass (19) durch die verschiedenen Kanäle (17) zu gewährleisten, umfasst das Gehäuse (10) Verbindungsbereiche (20) zwischen benachbarten Kanälen (17) ausgehend vom Einlass (18) bis zum Auslass (19). Nur zwischen den beiden Kanälen, die dem Einlass (18) und dem Auslass (19) zugeordnet sind, ist kein Verbindungsbereich (20) vorgesehen, obwohl diese direkt benachbart sind, da hier kein Kühlfluidfluss erwünscht ist. Die Verbindungsbereiche (20) sind als Verbindungsstege (25) ausgebildet. Die Verbindungsstege (25) verbinden die jeweiligen benachbarten Kanäle (17). Dafür ist jeweils eine Öffnung in den gegenüberliegenden seitlichen Wandungen (24) der benachbarten Kanäle (17) ausgebildet, die durch den Verbindungssteg (25) verbunden sind.

Weiterhin zeigt die Figur 1 einen zusätzlichen Verbindungsbereich (201, 202) zur Entlüftung in zwei möglichen Varianten. Der zusätzlicher Verbindungsbereich (201, 202) verläuft zwischen den benachbarten Kanälen (17), den der Einlass (18) und der Auslass (19) zugeordnet sind bzw. in welche diese münden. Der zusätzlichen Verbindungsbereich (201, 202) dient zur Entlüftung des Kühlsystems, damit die gesammelte Luft vom Einlass (18) direkt zum Auslass (19) strömen kann und nicht durch den mäanderförmigen Kühlraum gefördert werden muss. In der ersten gezeigten Variante ist der zusätzlichen Verbindungsbereich (201) als eine Nut in der Stirnfläche des Gehäuses (10) ausgeführt, welche gegossen werden kann oder einfach durch Abfräßen des Verbindungssteges (25) hergestellt werden kann. In einer anderen gezeigten Variante ist der zusätzlicher Verbindungsbereich (202) als zwei sich kreuzende und somit strömungstechnisch verbundene Bohrungen ausgeführt, welche schräg von den benachbarten Kanälen (17) gebohrt sind, den der Einlass (18) und der Auslass (19) zugeordnet sind.

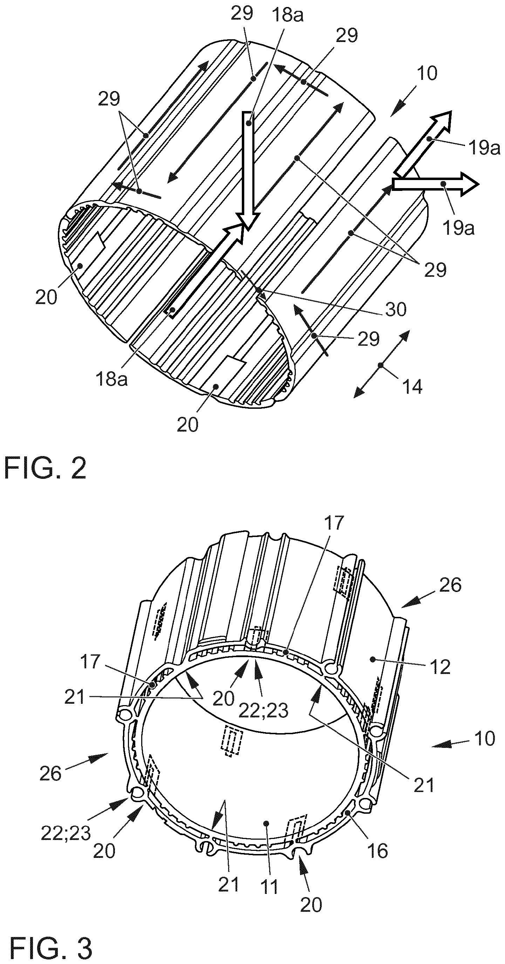

In Figur 2 ist eine perspektivische Ansicht eines erfindungsgemäßen Gehäuses gezeigt. Dabei sind in der Figur 2 die unterschiedlichen möglichen Einlassrichtungen (18a) und Auslassrichtungen (19a) gezeigt. Je nachdem, ob der Einlass (18) axial oder radial ausgebildet ist, ist die Einlassrichtung (18a) in radialer Richtung (13) oder axialer Richtung (14). Gleiches gilt für den Auslass (19), sodass die Auslassrichtung (19a) ebenfalls in radialer Richtung (13) oder axialer Richtung (14) verlaufen kann. Ferner ist in Figur 2 die Flussrichtung (29) des Kühlfluides gezeigt. Ausgehend von dem Einlass (18) fließt das Kühlfluid zunächst in axialer Richtung (14). Nachdem es einen Verbindungsbereich (20) durchflossen hat, tritt es in den benachbarten Kanal (17) ein und kehrt seine Flussrichtung (29) um, sodass es in dem benachbarten Kanal (17) in entgegengesetzte axiale Richtung (14) fließt. Dies setzt sich fort, bis das Kühlfluid den Auslass (19) erreicht.

Weiterhin zeigt die Figur 2 die zusätzliche Flussrichtung (30) zur Entlüftung des Kühlsystems. Ausgehend von dem Einlass (18) fließt das Kühlfluid in tangentialen Richtung von dem dem Einlass (18) zugehörigen Kanal (17) durch den zusätzlichen Verbindungsbereich (201, 202) direkt in den dem Auslass (19) zugehörigen Kanal (17) und bildet somit im Prinzip einen Bypass zu der Flussrichtung (29). Somit kann die gesammelte Luft vom Einlass (18) zuverlässig und schnell in den Auslass (19) und weiter weg aus dem Kühlsystem geführt werden ohne die Kühlleistung des Kühlsystems zu beeinflussen. Da der Querschnitt des zusätzlichen Verbindungsbereichs (201, 202) viel geringer als der anderen Verbindungsbereiche (20) ist, ist der Kühlfluiddurchfluss in der zusätzlichen Flussrichtung (30) im Vergleich mit der Flussrichtung (29) aufgrund des viel hören hydraulischen Widerstands unbedeutsam und kann die Kühlleistung des Kühlsystems nicht negativ beeinflussen.

In Figur 3 ist eine perspektivische Ansicht eines erfindungsgemäßen Gehäuses (10) gezeigt. Bei dem Gehäuse (10) der Figur 3 sind die Kanäle (17) nicht durch jeweilige seitliche Wandungen (24) gebildet, sondern die Kanäle (17) sind durch einen gemeinsamen Trennsteg (21) getrennt. Verbindungsbereiche (20) sind in der Ausführungsform nach Figur 3 durch entsprechende Öffnung (22) in den Trennstegen, insbesondere durch entsprechende Durchtritte (23), gebildet. Die Kanäle (17) sind axial offen ausgebildet. Diese bedeutet, dass das Gehäuse (10) an den axialen Enden (26) keine axiale Wandung zum Verschließen der Kanäle aufweist.

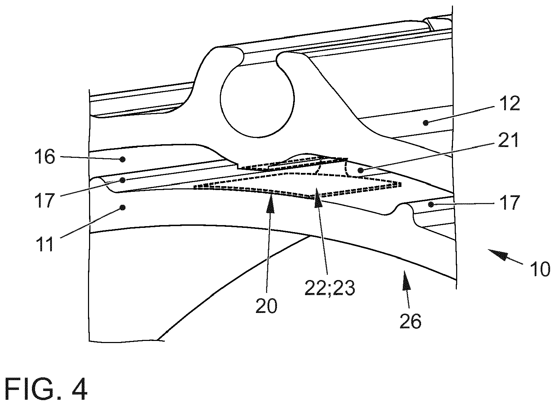

In Figur 4 ist eine Detailansicht auf ein axiales Ende (26) des Gehäuses (10) nach Figur 3 zu sehen. Deutlich ist die Öffnung (22) in den Trennstegen (21) zur Bildung eines Verbindungsbereiches (20) zwischen benachbarten Kanälen (17) zu sehen.

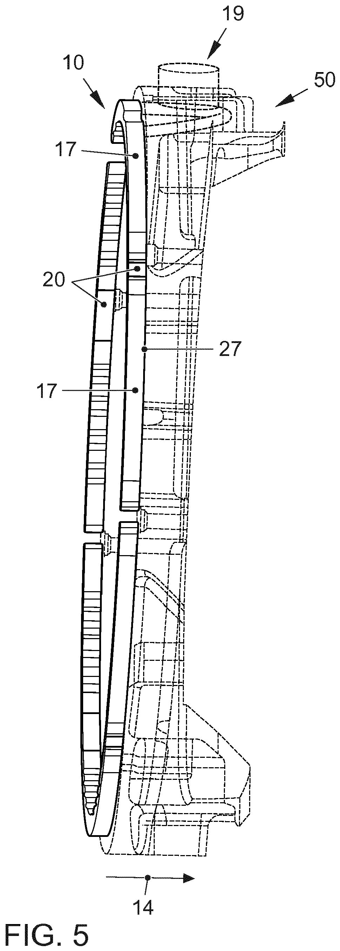

In Figur 5 ist eine perspektivische Ansicht des angrenzenden Teils eines erfindungsgemäßes Gehäuses (10) an ein weiteres Bauteil, ein sogenanntes angrenzendes Bauteil (50), zu sehen. Dabei begrenzt das angrenzende Bauteil (50) den Kühlfluidfluss in axiale Richtung (14). In anderen Worten dichtet das angrenzende Bauteil (50) die Kanäle (17) ab. Das angrenzende Bauteil (50) bildet insbesondere eine axiale Wandung (27), die die Kanäle (17) verschließt.

### Bezugszeichenliste

- 10: Gehäuse
- 11: innere Wandung
- 12: äußere Wandung
- 13: radiale Richtung
- 14: axiale Richtung
- 15: Umfangsrichtung
- 16: Hohlraum
- 17: Kanäle
- 18: Einlass
- 18a: Einlassrichtung
- 19: Auslass
- 19a: Auslassrichtung
- 20: Verbindungsbereich
- 201: Verbindungsbereich zur Entlüftung
- 202: Verbindungsbereich zur Entlüftung
- 21: Trennstege
- 22: Öffnung
- 23: Durchtritt
- 24: seitliche Wandung
- 25: Verbindungssteg
- 26: axiale Ende des Gehäuses
- 27: axialen Wandung
- 28: Luftschlitz
- 29: Kühlfluidflussrichtung
- 30: Kühlfluidflussrichtung zur Entlüftung
- 50: angrenzendes Bauteil

## Patentansprüche

1. Gehäuse (10) für eine elektrische Maschine,
wobei das Gehäuse (10) eine innere Wandung (11) und eine äußere Wandung (12) aufweist,
wobei die innere Wandung (11) und die äußere Wandung (12) konzentrisch zueinander angeordnet und voneinander beabstandet sind,
wobei zwischen der inneren Wandung (11) und der äußeren Wandung (12) ein in einer radialen Richtung (13) von der inneren Wandung (11) und der äußeren Wandung (12) begrenzter Hohlraum (16) zur Fluidkühlung der elektrischen Maschine ausgebildet ist, wobei der Hohlraum (16) in Umfangsrichtung (15) beabstandete Kanäle (17) aufweist, wobei das Gehäuse (10) einen Einlass (18) zum Einlassen von Kühlfluid und einen Auslass (19) zum Auslassen des Kühlfluides aufweist,
wobei in Strömungsrichtung gesehen zwischen dem Einlass (18) und dem Auslass (19) zwischen jeweils benachbarten Kanälen (17) ein Verbindungsbereich (20, 201, 202) zum Führen des Kühlfluids zwischen den benachbarten Kanälen (17) ausgebildet ist, und wobei die Verbindungsbereiche (20) alternierend an gegenüberliegenden axialen Enden (26) des Gehäuses (10) angeordnet sind, so dass der Hohlraum (16) zur Fluidkühlung mäanderformig ausgebildet ist, **dadurch gekennzeichnet, dass** ein zusätzlicher Verbindungsbereich (201, 202) in dem Gehäuse (10) angeordnet ist, wobei der zusätzliche Verbindungsbereich (201, 202) die Kanäle (17) verbindet, welche dem Einlass (18) und dem Auslass (19) benachbart sind, und dass der zusätzliche Verbindungsbereich (201, 202) einen geringeren Querschnitt als die Verbindungsbereiche (20) aufweist und eine Nut in einer Stirnfläche des Gehäuses (10) oder zwei sich kreuzende und somit strömungstechnisch verbundene Bohrungen, welche schräg von den benachbarten Kanälen gebohrt sind umfasst.

2. Gehäuse (10) nach Anspruch 1,
**dadurch gekennzeichnet, dass**
die Kanäle (17) in axialer Richtung (14) beidseitig offen oder zumindest einseitig, insbesondere beidseitig, geschlossen ausgebildet sind.

3. Gehäuse (10) nach einem der Ansprüche 1 oder 2,
**dadurch gekennzeichnet, dass**
zwischen der inneren Wandung (11) und der äußeren Wandung (12) in Umfangsrichtung (15) voneinander beabstandete Trennstege (21) zur Trennung der Kanäle (17) angeordnet sind, wobei die Verbindungsbereiche (20, 201, 202) jeweils als Öffnung (22) in einem Trennsteg (21) ausgebildet sind.

4. Gehäuse (10) nach einem der vorherigen Ansprüche,
**dadurch gekennzeichnet, dass**
die Kanäle (17) seitlich jeweils durch eine seitliche Wandung (24) begrenzt sind, wobei die Verbindungsbereiche (20, 201, 202) jeweils als Verbindungssteg (25) zwischen zwei seitlichen Wandungen (24) ausgebildet sind.

5. Gehäuse (10) nach einem der vorherigen Ansprüche,
**dadurch gekennzeichnet, dass**
das Gehäuse (10) einstückig ausgebildet ist.

6. Gehäuse (10) nach einem der vorherigen Ansprüche,
**dadurch gekennzeichnet, dass**
das Gehäuse (10) strangpressgezogen, gesintert, gegossen oder durch ein additives Verfahren, insbesondere 3D Druck, hergestellt ist.

7. Gehäuse (10) nach einem der vorherigen Ansprüche,
**dadurch gekennzeichnet, dass**
der Einlass (18) und/oder der Auslass (19) axial ausgebildet sind.

8. Gehäuse (10) nach einem der vorherigen Ansprüche,
**dadurch gekennzeichnet, dass**
der Einlass (18) und/oder der Auslass (19) radial ausgebildet sind.

## Claims

1. Housing (10) for an electrical machine,
wherein the housing (10) has an inner wall (11) and an outer wall (12), wherein the inner wall (11) and the outer wall (12) are arranged concentrically with each other and are spaced apart from each other, wherein between the inner wall (11) and the outer wall (12), a cavity (16) bounded in a radial direction (13) by the inner wall (11) and the outer wall (12) is formed for the fluid cooling of the electrical machine, the cavity (16) having channels (17) spaced apart in the circumferential direction (15), the housing (10) having an inlet (18) for introducing cooling fluid and an outlet (19) for discharging the cooling fluid,
wherein, seen in the flow direction between the inlet (18) and the outlet (19), a connection region (20, 201, 202) is formed in each case between adjacent channels (17) for guiding the cooling fluid between the adjacent channels (17), and wherein the connection regions (20) are arranged alternately on opposite axial ends (26) of the housing (10) so that the cavity (16) for fluid cooling is designed meandering, **characterized in that** an additional connection region (201, 202) is arranged in the housing (10), wherein the additional connection region (201, 202) connects the channels (17) which are adjacent to the inlet (18) and the outlet (19), and that the additional connection region (201, 202) has a smaller cross-section than the connecting regions (20) and includes a groove in an end face of the housing (10) or two intersecting and thus fluidically connected holes which are drilled diagonally from the adjacent channels.

2. Housing (10) according to Claim 1,
**characterized in that**
the channels (17) are open at both ends in the axial direction (14) or closed at least at one end, in particular at both ends.

3. Housing (10) according to either of Claims 1 or 2,
**characterized in that**
separators (21) for separating the channels (17) are arranged between the inner wall (11) and the outer wall (12) in the circumferential direction (15), the connection regions (20, 201, 202) in each case being designed as an opening (22) in a separator (21).

4. Housing (10) according to any one of the preceding claims,
**characterized in that**
the channels (17) are each bounded laterally by a lateral wall (24), the connecting regions (20, 201, 202) in each case being designed as a connecting web (25) between two lateral walls (24).

5. Housing (10) according to any one of the preceding claims,
**characterized in that**
the housing (10) is designed as a single-piece.

6. Housing (10) according to any one of the preceding claims,
**characterized in that**
the housing (10) is extruded, sintered, cast or produced by an additive method, in particular 3D printing.

7. Housing (10) according to any one of the preceding claims,
**characterized in that**
the inlet (18) and/or the outlet (19) are designed axial.

8. Housing (10) according to any one of the preceding claims,
**characterized in that**
the inlet (18) and/or the outlet (19) are designed radial.

## Revendications

1. Boîtier (10) pour une machine électrique,
le boîtier (10) présentant une paroi interne (11) et une paroi externe (12), la paroi interne (11) et la paroi externe (12) étant disposées de manière concentrique l'une par rapport à l'autre et étant espacées l'une de l'autre,
entre la paroi interne (11) et la paroi externe (12), une cavité (16) délimitée dans une direction radiale (13) par la paroi interne (11) et la paroi externe (12) étant formée pour le refroidissement par fluide de la machine électrique, la cavité (16) présentant des canaux (17) espacés dans la direction périphérique (15), le boîtier (10) présentant une entrée (18) pour introduire le fluide de refroidissement et une sortie (19) pour évacuer le fluide de refroidissement,
une zone de liaison (20, 201, 202) pour guider le fluide de refroidissement entre les canaux (17) adjacents étant formée, vue dans la direction d'écoulement, entre l'entrée (18) et la sortie (19) entre des canaux (17) adjacents respectifs et les zones de liaison (20) étant disposées de manière alternée sur des extrémités axiales opposées (26) du boîtier (10), de sorte que la cavité (16) soit formée pour un refroidissement par fluide en forme de méandre, **caractérisé en ce qu'une** zone de liaison (201, 202) supplémentaire est disposée dans le boîtier (10), la zone de liaison (201, 202) supplémentaire reliant les canaux (17) qui sont adjacents à l'entrée (18) et à la sortie (19) et **en ce que** la zone de liaison (201, 202) supplémentaire présente une section transversale inférieure aux zones de liaison (20) et comprend une rainure dans une surface avant du boîtier (10) ou deux alésages se croisant et ainsi reliés selon la technique des fluides, qui sont percés obliquement par rapport aux canaux adjacents.

2. Boîtier (10) selon la revendication 1,
**caractérisé en ce que**
les canaux (17) sont formés dans la direction axiale (14) ouverts des deux côtés ou fermés au moins d'un côté, en particulier des deux côtés.

3. Boîtier (10) selon l'une quelconque des revendications 1 ou 2,
**caractérisé en ce que**
des séparateurs (21) espacés les uns des autres et destinés à la séparation des canaux (17) sont disposés entre la paroi interne (11) et la paroi externe (12) dans la direction périphérique (15), les zones de liaison (20, 201, 202) étant formées respectivement sous la forme d'une ouverture (22) dans un séparateur (21).

4. Boîtier (10) selon l'une quelconque des revendications précédentes,
**caractérisé en ce que**
les canaux (17) sont délimités latéralement respectivement par une paroi latérale (24), les zones de liaison (20, 201, 202) étant formées respectivement sous la forme de pont de liaison (25) entre deux parois latérales (24).

5. Boîtier (10) selon l'une quelconque des revendications précédentes,
**caractérisé en ce que**
le boîtier (10) est conçu monobloc.

6. Boîtier (10) selon l'une quelconque des revendications précédentes,
**caractérisé en ce que**
le boîtier (10) est fabriqué étiré à la presse, fritté, moulé ou par un procédé additif, en particulier par impression 3D.

7. Boîtier (10) selon l'une quelconque des revendications précédentes,
**caractérisé en ce que**
l'entrée (18) et/ou la sortie (19) sont conçues de manière axiale.

8. Boîtier (10) selon l'une quelconque des revendications précédentes,
**caractérisé en ce que**
l'entrée (18) et/ou la sortie (19) sont conçues de manière radiale.
